# EUROPEAN PATENT SPECIFICATION

(11) **EP 4 548 533 B1**
(45) Date of publication and mention of the grant of the patent: **02.09.2026**
(21) Application number: 23737941.7
(22) Date of filing: 29.06.2023
(51) Int. Cl.: H04L 9/08

(54) **METHOD FOR LOCALIZING AN EAVESDROPPING ATTACK ON AN OPTICAL COMMUNICATION FIBER**
VERFAHREN ZUR LOKALISIERUNG EINES ABHÖRANGRIFFS AUF EINE OPTISCHE KOMMUNIKATIONSFASER
PROCÉDÉ DE LOCALISATION D'UNE ATTAQUE PAR ÉCOUTE D'ONDE SUR UNE FIBRE DE COMMUNICATION OPTIQUE

(30) Priority: 30.06.2022 EP 22182410
(43) Date of publication of application: 07.05.2025
(73) Proprietor: Max-Planck-Gesellschaft zur Förderung der Wissenschaften e.V., 80539 München (DE)
(72) Inventor: MARQUARDT, Christoph, 91301 Forchheim (DE); POPP, Alexandra, 91052 Erlangen (DE); STILLER, Birgit, 90429 Nürnberg (DE)
(74) Representative: FDST Patentanwälte
(86) International application number: PCT/EP2023/067822
(87) International publication number: WO 2024/003251

(56) References cited:
- WO-A1-2019/106381
- WANG YU ET AL: "A Comprehensive Study of Optical Fiber Acoustic Sensing", IEEE ACCESS, vol. 7, 16 July 2019 (2019-07-16), pages 85821 - 85837, XP011734319, DOI: 10.1109/ACCESS.2019.2924736
- MARIE TABI FOUDA BERNARD ET AL: "Principle and Application State of Fully Distributed Fiber Optic Vibration Detection Technology Based on [Phi]-OTDR: A Review", IEEE SENSORS JOURNAL, IEEE, USA, vol. 21, no. 15, 17 May 2021 (2021-05-17), pages 16428 - 16442, XP011867935, ISSN: 1530-437X, [retrieved on 20210729], DOI: 10.1109/JSEN.2021.3081459

## Description

The present application deals with a method for detecting an eavesdropping attack with an optical communication fiber, in particular with an optical communication fiber used for quantum cryptography/quantum key distribution (QKD) and/or within a QKD network.

In quantum cryptography, typically a "classical" message (e.g., some text) is transmitted secretly by first encoding the message with an encryption key, and then sending the encrypted message from the sender (traditionally called "Alice") to the receiver (called "Bob") over a normally untrusted channel. For the receiver to decode the initial message, he needs the encryption key. This key is encoded in some quantum mechanical state (e.g., some polarization state of light), and transmitted from the sender to the receiver by means of a suitable quantum channel (e.g., an optical fiber) in a way that physical correlations of the quantum state shared between the sender and the receiver, visible in quantum uncertainty relations on both sites and their mutual correlations, allow for setting an upper bound on a probability that an eavesdropping attack has taken place. This upper bound typically depends on channel noises and their correlations. So, the secrecy of the message originates in the possibility of detecting a possible attack on the quantum channel used for the distribution of the key (and thus, to discard the affected, possibly unsecure key). Thus, for most purposes, the terms quantum cryptography and QKD are used as synonyms. Details on the concepts of quantum cryptography/QKD can be found in N. Gisin, G. Ribordy, W. Tittel and H. Zbinden, "Quantum cryptography", Rev. Mod. Phys., vol. 74, no. 1, pages 145 to 195, 2002.

While QKD allows for detecting a possible eavesdropping attack, such as an "intercept and resend" attack (also known as "man in the middle" attack), it is typically not feasible to detect or estimate which type of attack has been used to interfere with the channel, nor where exactly the interference has taken place. Such knowledge, however, is also important in order to interrupt the attack and to be able to set-up again the quantum channel, since the transmission of the quantum key cannot continue as long as the quantum channel is "under attack".

Yu WANG et al., "A Comprehensive Study of Optical Fiber Acoustic Sensing". IEEE Access, vol 7, pages 85821-85837; https://doi.org/10.1109/access.2019.2924736, shows an optical fiber acoustic sensing system for long-distance monitoring of acoustic signals generated by external disturbances. To this end, interferometry methods for detecting a motion of a diaphragm are described, as well as optical time-domain reflectometry.

Tabi Fouda Bernard MARIE et al., "Principle and Application State of Fully Distributed Fiber Optic Vibration Detection Technology Based on Φ-OTDR: A Review", IEEE Sensors Journal, vol. 21, no. 15, pages 16428-16442, https://doi.org/10.1109/JSEN.2021.3081459, also shows optical time-domain reflectometry in the context of detecting vibrations of a fiber, by means of Rayleigh scattering processes.

In WO 2019 / 106 381 A1, it is shown a method of detecting eavesdropping, i.e. a physical layer attack, on an optical communications channel. The method comprises sending a first, classical message over an optical channel by encoding the message onto an optical carrier using a classical communications technique and sending a second, quantum message over the optical channel using a quantum cryptographic technique, e.g. a Continuous Variable Quantum Key Distribution (CV-QCD) technique; and detecting eavesdropping of the classical message on the optical channel by detecting the eavesdropping of the quantum message. In implementations the classical and quantum signals may be substantially indistinguishable to hinder an adversary from eavesdropping on the first signal without influence the second signal.

The objects of the present invention are achieved by means of the appended set of claims.

It is an object of the invention to present a method for localization of an eavesdropping attack on an optical communication fiber, in particular with an optical communication fiber used for QKD and/or within a QKD network.

According to the invention, the object is solved by a method for localizing, an eavesdropping attack on an optical communication fiber, in particular on an optical communication fiber used for quantum key distribution and/or within a QKD network, wherein a pump laser beam is coupled into a first ending of said optical communication fiber, thereby generating a pump signal propagating through the optical communication fiber, wherein a measurement of a Brillouin scattering of the pump signal is performed at either said first ending or a second ending of said optical communication fiber, and wherein a location of said eavesdropping attack, is inferred from the result of said measurement of the Brillouin scattering in the optical communication fiber.

The method according to the invention furthermore requires that a probe laser beam is coupled into the second ending of said optical communication fiber, generating a probe signal which is counterpropagating through the optical communication fiber with respect to the pump signal, wherein a spatial resolution for the measurement of the Brillouin scattering is encoded in a correlation of the respective frequencies of the pump signal and the probe signal. Embodiments of particular advantage, which may be inventive in their own right, are outlined in the depending claims and in the following description.

The notion of an optical communication fiber (in the following also denoted simply as "the fiber") shall comprise any sort of fiber suitable for transmitting optical signals (i.e., light in the broadest sense), e.g., a silica fiber, a photonic crystal fiber, a fiber drawn from transparent plastics such as organic polymers, or fibers from other suitable materials and/or with other transversal microstructures. The fiber comprises a first ending, preferably located at a first site of a communication channel (or network), and a second ending, preferably located at a second site of said communication channel (or network).

The notion of an eavesdropping attack shall comprise any sort of interaction from the outside of the fiber, such as a mechanical contact or a thermal interaction with the fiber in a way such that, after the fiber being mechanically installed and under normal working conditions, the mechanical contact or thermal interaction may alter the state of the fiber after said installation so that it may permit to extract at least some of the information content that is transmitted through the fiber. In particular, such a mechanical contact may comprise bending (i.e., inducing a local curvature), stretching, twisting (i.e., introducing a spiral movement), attaching an object (such as another fiber) to the fiber surface in order to tap of a part of the signal, among others. In this respect, in particular any interaction that could possibly be an attack to extract information (as described above), shall be considered as an eavesdropping attack ("worst-case scenario").

The notion of a pump laser beam shall comprise any sort of laser beam, be it continuous wave or pulsed, preferably with suitable properties (wavelength, power, pulse width etc.) for generating a Brillouin scattering in the fiber. In a preferred embodiment, the pump laser beam is a pulsed laser with a pulse length of >1ns, preferably > 10ns, in order to be able to interact with the acoustic wave (build-up time of about 10ns in silica fibers). The pump laser beam is generated by an appropriate laser device, wherein said laser device shall also perform all kinds of shaping, mode cleaning etc. The wavelength of the pump laser beam is preferably chosen in dependence on the Brillouin resonance, which is inversely proportional to the wavelength, and/or is preferably chosen in the C-band or in the O-band.

The pump laser beam gets coupled into the fiber, preferably by means of suitable passive optical devices known to the skilled person, such that the light of the pump laser beam propagates through the fiber, denoted as the pump signal. This pump signal, provided the suitable properties mentioned above, in a way yet to be described experiences Brillouin scattering in the fiber, which may be measured at the first ending of the fiber (back scattering), or at the second ending (forward scattering).

The measurement result of said Brillouin scattering of the pump signal may then be used to infer the location of an eavesdropping attack on the fiber, and in particular, its location along the fiber.

The term Brillouin scattering shall denote the scattering of light waves on acoustic waves, or, equivalently, the scattering from photons with acoustic phonons (in the following, the term "phonons" shall denote acoustic phonons). Acoustic waves are propagating pressure changes that create a periodically oscillating density, and thus, a periodically changing refractive index in a medium. The inelastic interaction of light wave with these changes of the refractive index, i.e., of a photon and phonon, leads to a frequency shift of the scattered light that depends on the velocity of the sound wave, as well as on as the refractive index of the medium. The scattering may generate or "enhance" an additional phonon in an acoustic wave, which leads to a transfer of the energy from the pump signal to the acoustic wave. In this so-called Stokes process, the frequency of the scattered photon is lower than that of the pump signal. In the so-called anti-Stokes process, the scattered photon "takes" its energy from a phonon (i.e., the acoustic vibration energy in the fiber is reduced, which is related to cooling), so the frequency of the scattered photon is higher than that of the pump signal. Details on the principles of Brillouin scattering may be found in C. Wolff, M. Smith, B. Stiller, and C. Poulton, "Brillouin scattering - theory and experiment: tutorial," JOSA B, vol. 38, no. 4, pp. 1243-1269, 2021.

In the following, particular focus shall be maintained on the Stokes process. Other possible embodiments notwithstanding, in the specific and particular case of thermal equilibrium, i.e., in the absence of another beam, thermally generated phonons are the main source of internal pressure variations, which are usually small leading to weak spontaneous Brillouin scattering (SpBS). When the incident pump signal of frequency νₚ (wave vector kₚ) strikes an acoustic wave with frequency ν_{b} (wave vector k_{b}), the incident pump signal scatters from the acoustic wave at a new frequency νₛ (wave vector kₛ), conserving energy and momentum (νₚ = ν_{b} + νₛ; kₚ = k_{b} + kₛ). Note that the wave vector k_{b} of the phonon in its dispersion relation depends on the sound velocity in the fiber medium. The so-called Brillouin frequency shift can then be derived as ν_{b} = 2nVₐ / λₚ with Vₐ denoting the acoustic velocity in the fiber, n its refractive index and λₚ being the wave length of the pump beam.

For the measurement of the Brillouin scattering of the pump signal, there are generally two options: first, the measurement may be performed in time domain, i.e., a tracking of the time for a specific pulse of the pump laser beam to be scattered may indicate, together with the speed of light in the fiber's medium, on which position along the fiber the scattering has taken place. This means that the spatial information on the location of the scattering is obtained by resolving for the (back) scattering time of the pulse. The scattered pulse may be detected directly, typically using an interferometer such as a Fabry-Pérot or Mach-Zehnder interferometer in order to filter out other contributions (such as Raleigh scattering), or via (balanced) heterodyne detection, preferably using a portion of the pump laser beam (typically, about 10% of its power) as a local oscillator (i.e., a phase reference) and interfering it with the scattered pump signal (i.e., the Brillouin scattered portion of the pump signal) in order to detect the Brillouin frequency shift. The spatial resolution is limited in particular by the pulse length, and also by the pulse power. This pulse power may be increased in order to improve the signal-to-noise ratio (SNR), however, only up to a certain limit from which on non-linear effects in the fiber may degrade the measurement results.

The second option for the measurement is operating in the frequency domain by using modulations such as sine waves on the pump laser beam for encoding the spatial resolution. The amplitude and phase of the back-scattered signal are then analyzed by means of, e.g., a vector network analyzer, and a Fourier transform is performed on the resulting data in order to obtain the amplitude of the back-scattered signal as a function of the longitudinal position in the fiber. For this option, a probe laser beam is coupled into the second ending of said fiber, generating a probe signal which is counterpropagating through the fiber with respect to the pump signal.

The measurement shall preferably be performed by means of a suitable detection device configured to detect the Brillouin scattered portion of the pump signal that exits the fiber (and, if necessary, to separate this portion from the pump laser beam). The detection device to this end may comprise optical detection components such as photo diodes and electronic signal processing components (such as a lock in amplifier or a recording device) connected to the optical detection components.

Typically, the detection device comprises a so-called circulator (also: "optical circulator"), in order to separate the pump laser beam entering the first end of the fiber from the (Brillouin-) back-scattered (portion of the) pump signal which exists the same end of the fiber. A circulator is an optical multi-port (e.g., 3- or 4-port) device designed such that light entering any port exits from the next (in a circular direction). This means that if the pump laser beam enters the circulator mounted in front of the fiber's first end from a 1^{st} port, it is emitted from a 2^{nd} port optically connected to said first end of the fiber to enter the fiber there. But if some of the pump signal is scattered back towards the circulator (to its 2^{nd} port which is optically connected to the first end of the fiber), it does not exit the circulator at the 1^{st} 1, but instead exits from the 3^{rd} port.

The spatial information encoded either in the propagation time of a pulse (time domain) or in the complex transfer function of a back-scattered pump signal (frequency domain) allows for identifying the location of an eavesdropping attack on the fiber. Typically, the spatial resolution may be in the order of magnitude of 1 m.

Note that the particular measurement not only needs to take into account the way in which the spatial information is encoded into the pump laser beam, i.e., time or frequency domain, but the pump laser beam is preferably prepared for the corresponding measurement accordingly.

The measurement of the Brillouin scattering of the pump signal as described above allows for detecting and in particular localizing a manipulation of the fiber in the untrusted domain (i.e., in a space where eavesdropping attacks on the fiber cannot be excluded, in particular to lack of total and permanent control over said space) which may have been performed by an eavesdropper. Eavesdropping changes the properties of the optical phonons, since it changes the acoustic and optical properties of the fiber material.

In particular, the method may be applied during a QKD protocol using optical signal states and optical communication over a respective fiber, or also as a part of such a QKD protocol: in case that quantum correlations of a physical state shared between the sender and the receiver (e.g., a polarization of light, or so-called "prepare-and-measure" single photon qubits) fall below a security threshold, it is inferred that secure communication can no longer be guaranteed. Then, and in particular as a part of the QKD protocol, the location of a possible eavesdropping attack on the optical communication fiber used for the transmission of the quantum states may be detected by means of the method described above.

It is worth mentioning that the proposed method is independent of the QKD protocol, and in particular of the nature of the physical devices implementing said QKD protocol (i.e., the QKD system), as long as optical communication is used. The QKD protocol, thus, may be a continuous variable (CV) or discrete variable (DV) scheme, may or not use decoy states, may encode in phase and amplitude or in polarization etc.

The proposed method may be performed at random times in order to check the integrity of the fiber used for optical communication, wherein the devices used for performing the method may form part of the QKD system, or may be independent. The method may also be performed upon a notification or an alert from the QKD system, e.g., in case the quantum correlations necessary for secure transmission fall below a certain threshold. The method may also be performed as part of a maintenance routine.

In an embodiment, a probe laser beam is coupled into the second ending of said fiber, generating a probe signal which is counterpropagating through the fiber with respect to the pump signal. This means in particular that the pump signal and the probe signal propagate through the fiber in opposite directions. The probe laser beam preferably has a power of at least 0.1 % and at most 10% of the pump laser beam. In a favorable embodiment, the probe laser beam has a power of approx. 1 % of the power of the pump laser beam. Preferably, a frequency difference between the pump signal and the probe signal is in the order of magnitude of the Brillouin frequency shift for the fiber material and dimensions. This leads to an interference between the pump signal and the probe signal, i.e., amplitude variations of the resulting superposition signal oscillating with the difference frequency. If the correct phase matching conditions are met, the counterpropagating pump and probe signals may lead to density oscillations (i.e., pressure/density waves) due to electrostriction of the fiber medium, i.e., to the excitation or enhancement of an acoustical wave, adding a phonon in a specific mode. The acoustic field/pressure wave changes the dielectric field, in particular creating a refractive index grating inside the medium. The pump signal scatters with the refractive index grating, creating an optical photon (backwards traveling) and an optical phonon (in the Stokes case also backwards traveling). The energy for this phonon is then taken from the pump signal, lowering its frequency by the frequency amount of the generated or excited phonon, i.e., by the Brillouin frequency shift. In this case, one has a stimulated Brillouin scattering (SBS), the stimulation coming from the probe signal. The photon is added to the interference pool, while the phonon is added to the density pool enhancing the process and thus additionally driving it to create stimulated Brillouin scattering.

As in the case for the SpBS, the spatial information may be encoded either in the propagation time of a pulse of the pump laser beam (so-called Brillouin optical time domain analysis, BOTDA), or in the frequency modulations of the pump laser beam (so-called Brillouin optical frequency domain analysis, BOFDA). The SBS process typically can be orders of magnitude more efficient than the corresponding SpBS process. For details on the different Brillouin analysis techniques, see P. Lu, N. Lalam, M. Badar, B. Liu, B. T. Chorpening, M. P. Buric, and P. R. Ohodnicki, "Distributed optical fiber sensing: Review and perspective," Applied Physics Reviews, vol. 6, no. 4, p. 041302, 2019, in particular pages 7 to 14.

In a particular embodiment, a spatial resolution for the measurement of the Brillouin scattering is encoded in a correlation of the respective frequencies of the **pump signal** and the probe signal (so-called Brillouin optical correlation domain analysis, BOCDA). In particular, the pump and probe laser frequencies are being modulated by means of a respective sweep frequency, wherein the frequency of the probe laser beam is preferably given by the frequency of the pump laser beam shifted by an offset frequency. Details on the BOCDA technique may be found in K. Hotate and T. Hasegawa, "Measurement of Brillouin gain spectrum distribution along an optical fiber using a correlation-based technique - proposal, experiment and simulation" IEICE transactions on electronics, vol. 83, no. 3, pp. 405-412, 2000.

Without the use of the probe laser beam, a spatial resolution for the measurement of the Brillouin scattering may also be encoded in a correlation of the respective frequencies of the pump signal and a respective reference oscillator (so-called Brillouin optical correlation domain reflectometry, BOCDR).

Preferably, the sweep frequency is then scanned over a sweep frequency range, and most preferably, the offset frequency is scanned over a shifting frequency range.

In the case of the counterpropagating pump and probe signals, in case these two signals are being sine-modulated by the same sweep frequency fₘ, (e.g.., the modulation of the original frequency is sin(2π fₘ)), it can be shown that in such a case, the frequency difference between the pump signal frequency ωₚ and the probe signal frequency ω_{q} depends linearly on the sine of the sweep frequency times a longitudinal location along the fiber: ${ω}_{p} - {ω}_{q} ∝ sin \left(2π⋅{f}_{m}⋅z/{v}_{g}\right)$ with the longitudinal position z along the fiber, and v_{g} being the acoustic group velocity in the fiber. Equation (i) establishes a correspondence between the longitudinal position z along the fiber and the sweep frequency fₘ.

For an SBS to occur, it is required a constant frequency difference (the proper Brillouin frequency shift) between the pump and probe signals at a given location along the fiber. If the frequency distance of the two signals at a certain location is not constant, i.e., is oscillating, then SBS will not happen at this location. From equation (i), it can be seen that such a stable difference (in this case, of zero) will happen wherever ${f}_{m} ⋅ z / {v}_{g} = n ∈ ℤ$. Thus, varying the sweep frequency allows for varying the (z-) position along the fiber at which a stable difference between the pump and probe signal is achieved, and thus, at which SBS occurs. For practical purposes, preferably higher order positions (with large n) are taken, so that small shifts in fₘ can lead to bigger shifts in the position z of the SBS than for lower order positions (e.g., for n = 1). This may be achieved by introducing a delay between the pump and the probe laser beams.

For the spatial resolution in z, i.e., in order to vary the position z of the SBS, the sweep frequency is preferably scanned over an appropriate sweep resolution range. Furthermore, adding an offset to the frequency difference given in equation (i), and scanning said offset frequency over a shifting frequency range (preferably, in the order of magnitude of the Brillouin frequency shift for the given conditions), the Brillouin gain may be obtained as a function of said offset frequency (and of the longitudinal location, by the sweep frequency). This way, a Brillouin gain spectrum may be measured. Preferably, a sampling rate of the measurement of the Brillouin scattering is chosen in dependence on the spatial resolution.

In an embodiment, a reference measurement of the Brillouin scattering is performed on the fiber under preferential and/or standard conditions, an operation measurement of the Brillouin scattering is performed on the fiber during normal communication operation, and the eavesdropping attack on the fiber is inferred from a comparison of the respective results of said reference measurement with said operation measurement. In particular, this comprises that the reference measurement of the Brillouin scattering is performed under conditions which, preferably, are fully controlled and "ideal" in the sense that is has been ensured that the fiber does not have any external manipulation or the like by an eavesdropper, e.g., right after finishing the installation process (when all possibly critical points of the fiber may still be accessible or even visible for direct control). Then, under these controlled conditions, the reference measurement is performed in order to obtain a Brillouin measurement, and preferably, a Brillouin spectrum, of the fiber without any manipulation or interference. This "un-interfered" reference measurement can then be compared to a measurement of the Brillouin scattering during normal operation (the operation measurement), i.e., when the lack of an eavesdropping attack cannot be ensured anymore. This way, it is possible to infer the location of an eavesdropping attack from the deviations of the reference measurement that have been measured during normal operation.

From said comparison, in particular from the deviation of the Brillouin gain spectra of the reference and operation measurements, even a technical nature of the eavesdropping attack on the fiber may be recognized. The notion of a technical nature of the eavesdropping attack shall comprise different classes of physical interactions, such as different mechanical deformations of the fiber leading to changes in the fiber's stress tensor and/or strain tensor like stretching, bending or twisting, but also thermal interactions such as heating, and mechanical attachments of other fibers or similar passive optical objects onto the fiber (in particular, into its surface). The idea behind this is that eavesdropping attacks of different nature in the sense as described above, at the same location along the fiber, will lead to different deviations of the Brillouin gain spectrum from the reference measurement's Brillouin gain spectrum. This way, the Brillouin gain spectrum may be used as some sort of a finger print of the nature or type of the particular eavesdropping attack.

In a particularly efficient way, the recognition of this technical nature may be performed a machine learning algorithm. The machine learning algorithm, e.g., a neural network, may be trained to recognize characteristic deviations in a Brillouin gain spectrum from the corresponding reference measurement's Brillouin gain spectrum and connect these deviations to a particular nature of an eavesdropping attack.

Preferably, to this end, the reference measurement is performed during a training phase of the machine learning algorithm, and at least one reference interference measurement of the Brillouin scattering is performed on the fiber under a controlled eavesdropping attack of a given nature during said training phase. This means that during the training phase, an eavesdropping attack of known technical nature is performed on the fiber, and the corresponding Brillouin gain spectrum is measured (as a reference interference measurement) as some sort of a calibration for the machine learning algorithm to "know" what the Brillouin gain spectra of different eavesdropping attacks (i.e., of different technical nature) "look like" and where characteristic frequency peaks etc. are located for a specific eavesdropping attack.

In case that a probe laser beam is used, a polarization averaging is preferably performed on the probe signal for a given offset frequency and/or a given sweep frequency and/or a given frequency of the pump signal, in order to possibly compensate for any polarization mismatch between the pump and probe signals that may originate from polarization changes the probe signal may experience during its propagation along the fiber.

In an embodiment, an optical communication fiber network containing at least an auxiliary optical communication fiber is used, said auxiliary optical communication fiber connecting having a first ending and a second ending, said second ending being located at the same site as the second ending of the optical communication fiber, and the probe laser beam is transmitted through the auxiliary optical communication fiber from its first ending to its second ending, and coupled into the second ending of the optical communication fiber for the measurement of the Brillouin scattering. This comprises in particular that the fiber communication network comprises at least two communication fibers with the same second ending (preferably, at a receiver site), and preferably with the same first ending. One fiber is the fiber to which the method described above is applied to (preferably, the fiber used for QKD), and the other fiber (the auxiliary optical communication fiber) is used for transmitting the probe laser beam, generated preferably by a probe laser device located at the site of the pump laser device (preferably, at a sender site) generating the pump laser beam, as an auxiliary probe signal to the second ending of the former fiber.

An alternative embodiment for implementing the probe laser beam in such a optical communication fiber network containing at least an auxiliary optical communication fiber is to transmit a synchronization information from a site of the pump laser device through the auxiliary optical communication fiber to the probe laser device located at the second ending of the auxiliary optical communication fiber, and to set frequency and/or phase properties of the probe laser beam coupled into the second ending of the optical communication fiber according to said synchronization information. This comprises in particular: the pump laser device and the probe laser device are located at opposite endings of the optical communication fiber of interest, and the phase and/or frequency and/or amplitude properties of the probe laser beam are set in dependence of the synchronization information (which preferably comprises information on or is related to corresponding properties of the pump laser beam) that is transmitted through the auxiliary optical communication channel.

The invention further discloses a method for QKD, wherein a quantum correlation of a sender's portion and a receiver's portion of a physical state shared between said sender and said receiver via an optical communication fiber is measured, and wherein, if said quantum correlation falls below a given threshold, an eavesdropping attack is localized by the method for detecting and localizing an eavesdropping attack described above.

The invention also discloses an optical communication fiber network, comprising: at least one optical communication fiber configured for transmitting optical signals, a pump laser device optically coupled to a first ending of said optical communication fiber and configured to generate a pump laser beam and to couple said pump laser beam into said first ending, a probe laser device optically coupled to a second ending of said optical communication fiber and configured to generate a probe laser beam and to couple said probe laser beam into said second ending, a detection device optically coupled to said first ending and configured to detect a Brillouin scattering in an optical signal leaving the fiber at the first ending, and a control unit configured to perform control and analysis operations on the pump laser device and the detection device, and to perform the aforementioned method for localizing an eavesdropping attack by suitable control and analysis operations on the pump laser device, the probe laser device and the detection device.

The invention furthermore discloses a control unit, configured to perform control operations on a pump laser device optically coupled to a first ending of an optical communication fiber and configured to generate a pump laser beam and to couple said pump laser beam into said first ending, to perform analysis and control operations on a detection device optically coupled to said first ending and configured to detect a Brillouin scattering in an optical signal leaving the fiber at the first ending, and to perform the aforementioned method for localizing an eavesdropping attack by suitable control and analysis operations on the pump laser device and the detection device.

Finally, the invention discloses a QKD network, comprising the aforementioned optical communication fiber network according to the invention, wherein the control unit is further configured to perform the aforementioned QKD method according to the invention.

The QKD method and network, as well as the optical communication network and the control unit, share the advantages of the aforementioned method for detecting, and in particular localizing, an eavesdropping attack on an optical communication fiber. The features, favorable embodiments and their specific assets of said method for detecting, and in particular localizing, an eavesdropping attack on an optical communication fiber, may be directly transferred, mutatis mutandis, to the QKD method and network, as well as to the optical communication network and the control unit according to the invention.

The attributes and properties as well as the advantages of the invention which have been described above are now illustrated with help of drawings of embodiment examples. In detail,
- figure 1: shows a schematic view of an optical communication fiber network,
- figure 2: shows a schematic electro-optical circuit configured to detect the location of an eavesdropping attack in the optical fiber communication network of Figure 1,
- figure 3: shows an intensity plot of a time evolution of the difference of the frequencies of the pump and probe signals of figure 2 as a function of longitudinal position z along an optical communication fiber, and
- figure 4: shows a Brillouin gain spectrum measured along a fiber for the fiber without any attack (left image), and with a manipulation of the fiber (right image).

Parts and variables corresponding to one another are provided with the same reference numerals in each case of occurrence for all figures.

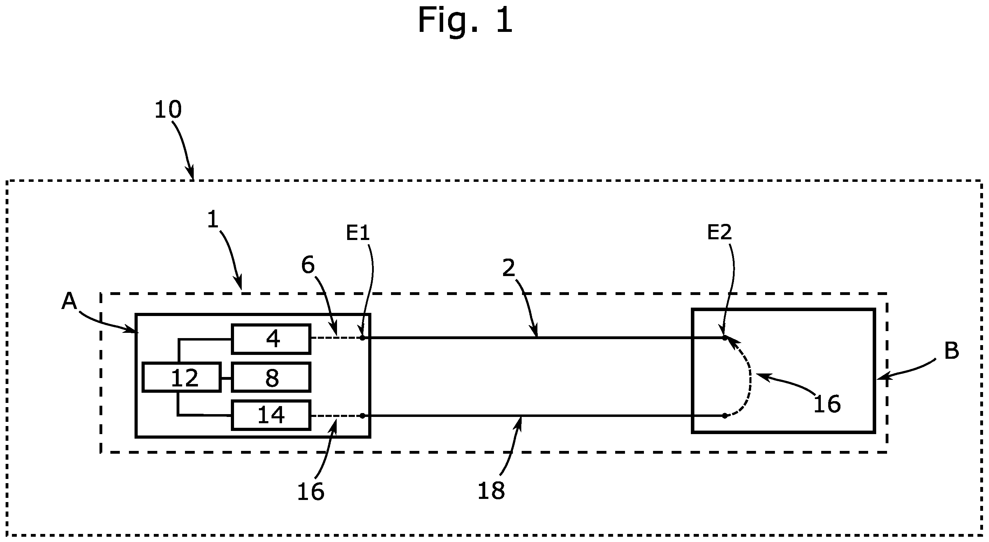

In Figure 1, a schematic view of an optical communication fiber network 1 is shown. The optical communication fiber network 1 comprises an optical communication fiber 2 configured for the transmission of optical signals yet to be described, a pump laser device 4 configured to generate a pump laser beam 6, and a detection device 8. The optical communication fiber network 1 may be part of a QKD network 10, and may be used therein to transmit quantum information from a sender A to a receiver B via an optical quantum state shared between said sender A and said receiver B.

The pump laser device 4 is optically coupled to a first ending E1 of the optical communication fiber 2, so that the pump laser beam 6 generated by the pump laser device 4 can be coupled into said first ending E1. By means of the propagation of the signal corresponding to the pump laser beam 6 through the optical communication fiber 2, a Brillouin scattering process is initiated. The scattered part of the signal corresponding to the pump laser beam 6 then gets measured by the detection device 8 in a way yet to be described, wherein the detection device 8 is optically coupled to the first ending E1 of the optical communication fiber 2.

In order to control said measurement by the detection device 8 and to perform analysis operations on a corresponding measurement signal, as well as for controlling operations of the pump laser device 4, the optical communication fiber network 1 furthermore comprises a control unit 12 connected to the pump laser device 4 and to the detection device 8.

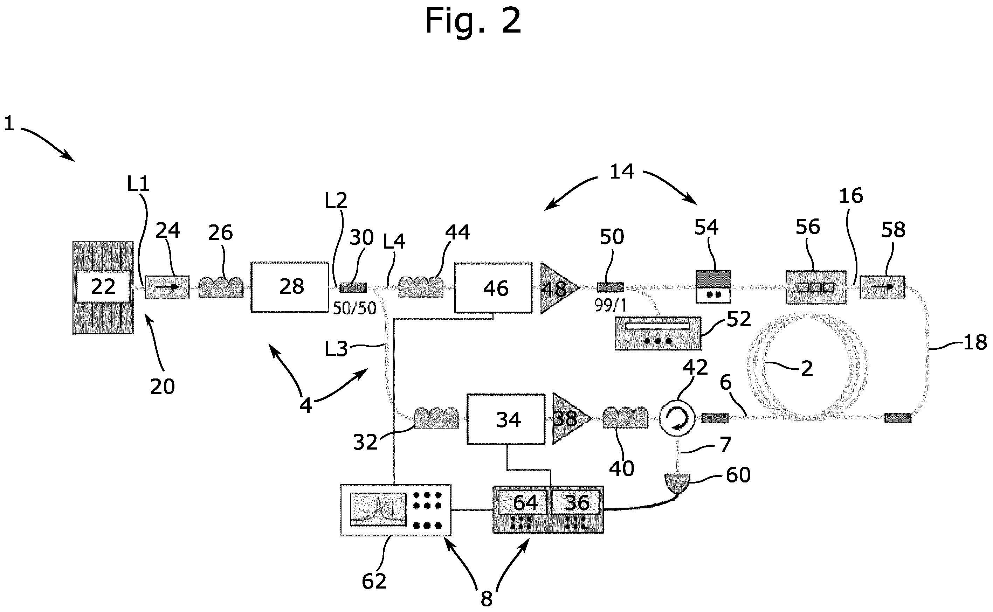

The optical communication fiber network 1 furthermore comprises a probe laser device 14 configured to generate a probe laser beam 16, and optically coupled to a second ending E2 of the optical communication fiber 2 via an auxiliary optical communication fiber 18, so that the probe laser device 16 generated by the probe laser device 14 can be coupled into said second ending E2. The probe signal (i.e., the counter-propagating signal of the probe laser beam 16 through the optical communication fiber 2) interferes with the pump signal (i.e., the signal of the pump laser beam 6 propagating through the optical communication fiber 2). This way, the setup of the pump laser device 4 and the probe laser device 14 generates a map of the optical communication fiber 2 using localized stimulated SBS. The localized SBS in this embodiment is created via Brillouin optical correlation domain analysis. In this technique (which is explained in detail with help of Figure 2), acoustic waves are created in a localized fashion using the correlated, counter-propagating pump and probe signals which interfere, and via electrostriction of the interference field, cause density variations of the fiber material and corresponding variations of its refractive index, thus generating or enhancing the acoustic waves at which the pump signal is scattered. The spatial extent of the acoustic wave is determined by the correlation of said two signals.

In the embodiment shown in Figure 1, the probe laser device 14 is located at the sender A, so that for coupling in the probe laser beam 16 into the second ending E2 (at the receiver B) of the optical communication fiber 2, the probe laser beam 16 has to be transmitted to the receiver B. This is done via the auxiliary optical communication fiber 18, which at the receiver B is optically coupled to the second ending E2 of the optical communication fiber 2 of interest in a suitable way.

Likewise, the probe laser device 14 could also be located at the receiver B. In that case (not shown), synchronization information for the probe laser device 14 for synchronizing the probe laser device 14 with the pump laser device 4 also needs to be transmitted from the sender A to the receiver B. This may equally be achieved via said auxiliary optical communication fiber 18 of the optical fiber communication network 1, or generally by using means of synchronization between the sender A and the receiver B.

While the optical fiber communication network 1 is a network for the encryption of quantum information, the detection of an eavesdropper to be shown here can also be used for classical encrypted fiber network systems. While it is generally possible to keep a sender and a receiver of confidential information under enhanced surveillance, e.g., by using access restricted areas, this is usually highly impractical (or often even impossible) for the transmission channel. It is especially complicated for local-area communication inside busy hub spaces inside urban areas, where many access points to the network might exist. Therefore, it is generally impossible to control and restrict all access points of the network continuously.

In Figure 2, details of a detection of an eavesdropper in the optical fiber communication network 1 of Figure 1 is shown by means of a schematic of an electro-optical circuit. The setup generates a position and frequency resolved map of the optical communication fiber 2. Exceptional in this case is the sensitivity of the generated acoustic wave with regard to ambient changes. In contrast to other techniques, the local measurement of the complete Brillouin spectrum of the fiber allows to resolve continuous disturbances of the system, such as bending of the fiber or integration of other fibers with slightly different doping. It is hardly possible, if not impossible, to resolve these local changes in birefringence with current state of commercially available technology, so called optical time domain reflectometers (OTDR). These changes are however the basis of most common eavesdropping attacks. Strong bending of the fiber enables evanescent coupling of the light, which might then be used by an eavesdropper. Inserting a fiber of different doping composition might hint an inserted coupling device allowing the eavesdropper to extract light. In contrast to simply analyzing the loss of the network, which will only hint at the presence of an eavesdropper, the apparatus is capable of localizing the eavesdropper position with cm precision over a range of several km. It is furthermore not necessary to perform a quantitative measurement of the channel properties as long as there is a reference measurement of the untapped channel, for example from commissioning. Using this qualitative comparison, machine learning or pattern recognition techniques can be used to enhance the system capabilities.

A master laser device 20 comprises a distributed fiber Bragg laser 22, which is frequency modulated by direct current modulation. Instead of the distributed fiber Bragg laser 22, another laser device may be used, preferably with a wavelength in the range of 1550 nm. As one possible alternative (among others), the master laser device 20 may comprise an arbitrary waveform generator in combination with a single sideband modulator for modulation of the laser frequency.

The laser beam L1 generated by said distributed fiber Bragg laser 22 is passed through an optical isolator 24 to prevent backscattering. A polarization controller 26 optimizes the polarization of the light for a first Mach-Zehnder modulator 28 used to compensate the amplitude modulation caused by the direct current modulation. Next, the laser beam L2 leaving the output of said Mach-Zehnder modulator 28 is passed through an in-fiber 50/50 beam splitter 30.

The laser beam L3 leaving a first output port (not shown in detail) of the 50/50 beam splitter 30 will be used for the generation of the pump laser beam 6. To this end, another polarization controller 32 is used for polarization optimization of the laser beam L3, which is afterwards sent into a second Mach-Zehnder-Modulator 34 after polarization optimization. This second Mach-Zehnder-Modulator 34 is connected (i.e., via a data connection) to a lock-in amplifier 36. The second Mach-Zehnder-Modulator 34 is used to modulate a so-called lock-in signature (e.g., of about 1 MHz) on the pump laser beam 6. In a next step, the light is amplified by an optical amplifier 38 (e.g., using an Erbium-doped fiber amplifier) and the polarization is adjusted again by yet another polarization controller 40. The emerging light for the present purpose is then considered as the pump laser beam 6, and the whole set-up from the master laser device 20 to the polarization controller 40 may be considered the pump laser device 4, as shown in Figure 1. This pump laser beam 6 is launched into the optical communication fiber 2 under test using an optical circulator 42.

The laser beam L4 leaving a second output port (not shown in detail) of the 50/50 beam splitter 30 will be used for the generation of the probe laser beam 16. To this end, another polarization controller 44 is used for polarization optimization of the laser beam L4, which is afterwards sent into an optical modulator 46 (e.g., a single-sideband-modulator), and passed through an optical amplifier 48 (e.g., an Erbium-doped fiber amplifier) for signal enhancement. The optical modulator is configured to shift the carrier frequency of the polarization-optimized laser beam L4 to the Brillouin resonance frequency of the optical communication fiber 2 under test. For control purposes, a small part of the light is tapped off using a 99/1 beam splitter 50 and an optical power meter 52. The main component of the light is filtered by a narrow-band bandpass filter 54, and afterwards randomized in polarization by using a polarization-randomizer 56. The emerging light for the present purpose is then considered as the probe laser beam 16, and the whole set-up from the master laser device 20 to the polarization randomizer 56 may be considered the probe laser device 14, as shown in Figure 1. This probe laser beam 16 is then fed through the auxiliary optical communication fiber 18 towards the site of the receiver B, where it is launched into the optical communication fiber 2 under test using an optical isolator 58.

The optical power of a backscattered portion of the pump signal 7, i.e., the signal corresponding to the pump laser beam 6 which is propagating through the optical communication fiber 2, is measured using a photodiode 60 and the lock-in amplifier 36. The Brillouin signal is typically of the order of magnitude of about 10 GHz, which is beyond the resolution frequency of most commercial photodiodes. However, by using the lock-in signature in the pump laser beam 6, the magnitude of the Brillouin signal may be retrieved by demodulating the lock-in signature at the corresponding frequency. The detection in particular may be performed as a lock-in detection, a heterodyne detection, a balanced heterodyne detection or a balanced homodyne detection.

A measurement of the sideband frequency can be taken using an oscilloscope 62. As an alternative (not shown), an analogue-digital converter may be used. The photodiode 60 and the lock-in amplifier 36, as well as the oscilloscope 62 and an analyzing unit 64 configured to analyze the measurement results, may be considered the detection device 8 of Figure 1. The analyzing unit in particular may perform operations such as filtering, smoothing, increasing resolution in frequency and/or in z, improving the SNR and the like.

In order to determine a location of an eavesdropper along the optical communication fiber 2, the relationship of Equation (i) between the difference of the pump and probe signals ωₚ, ω_{q}, the sweep frequency fₘ for sweeping the frequency ωₚ of the pump signal 7 and the longitudinal position z of the eavesdropping attack along the optical communication fiber 2 is applied.

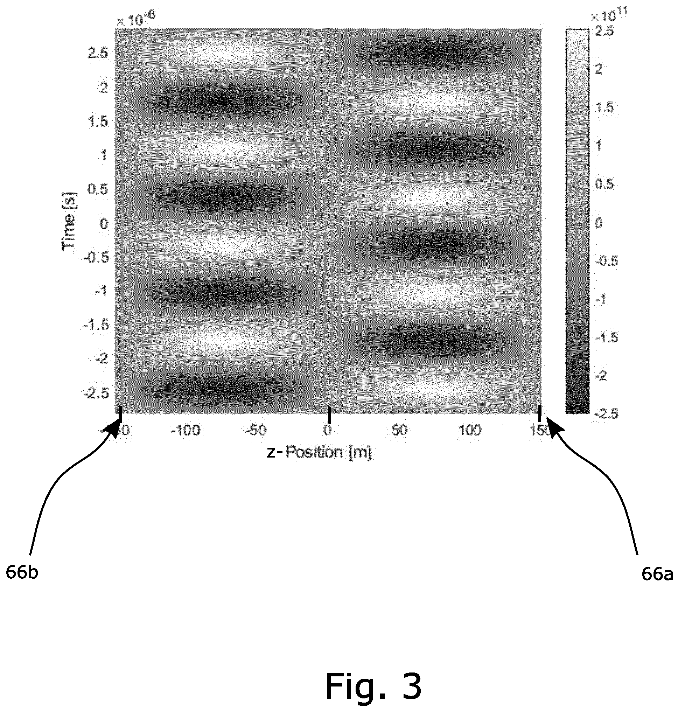

Figure 3 is showing an intensity plot of the time evolution of the difference Δ of the frequencies of the pump and probe signals ωₚ - ω_{q} (in Hz) as a function of longitudinal position z along the optical communication fiber 2. In accordance with Equation (i), at the longitudinal position z = 0 there is a stable difference Δ = ωₚ - ω_{q} (of zero, to be precise in the present case). At another two longitudinal positions 66a and 66b of approx. +/- 150m, the difference Δ of the pump and probe signal frequencies is also stable, due to the argument in the sine of the r.h.s of Equation (i) fulfilling the condition ${f}_{m} ⋅ z / {v}_{g} = n ∈ ℤ$. At these longitudinal positions 66a, 66b as well as z= 0, due to the stable difference Δ, SBS can in principle occur. At other longitudinal positions, it can be seen that the difference Δ is not stable over time, and thus, the pump and probe signal frequencies ωₚ, ω_{q} are "out of tune", effectively suppressing an efficient SBS. Thus, upon tuning the sweeping frequency fₘ in Equation (i), one effectively changes the longitudinal position 66a, 66b at which the difference Δ is stable so that SBS can occur.

Then, scanning or tuning this difference Δ = ωₚ - ω_{q} over a narrow band allows for identifying the maximum of the so-called Brillouin gain from the spectrum of the SBS, i.e., the maximum of the SBS process to the given sweep frequency fₘ, and thus, for a given longitudinal position z in the optical communication fiber 2. A location zE of an eavesdropper preferably is then identified by a comparison of a reference measurement of this Brillouin (gain) spectrum along the optical communication fiber 2 with the measurement of the Brillouin spectrum during normal operation. The reference measurement is preferably taken under specific conditions where it can be made sure by direct observation that no eavesdropper is present, e.g., right upon installation of the optical communication fiber 2 in a building, and/or when the optical communication fiber 2 can still be directly observed over its full length.

A measurement of the Brillouin spectrum during normal operation is taken, preferably if there is a serious suspicion for an eavesdropper attack (e.g., from the loss of quantum correlations between the sender and the receiver in a QKD protocol) or as a routine safety measure.

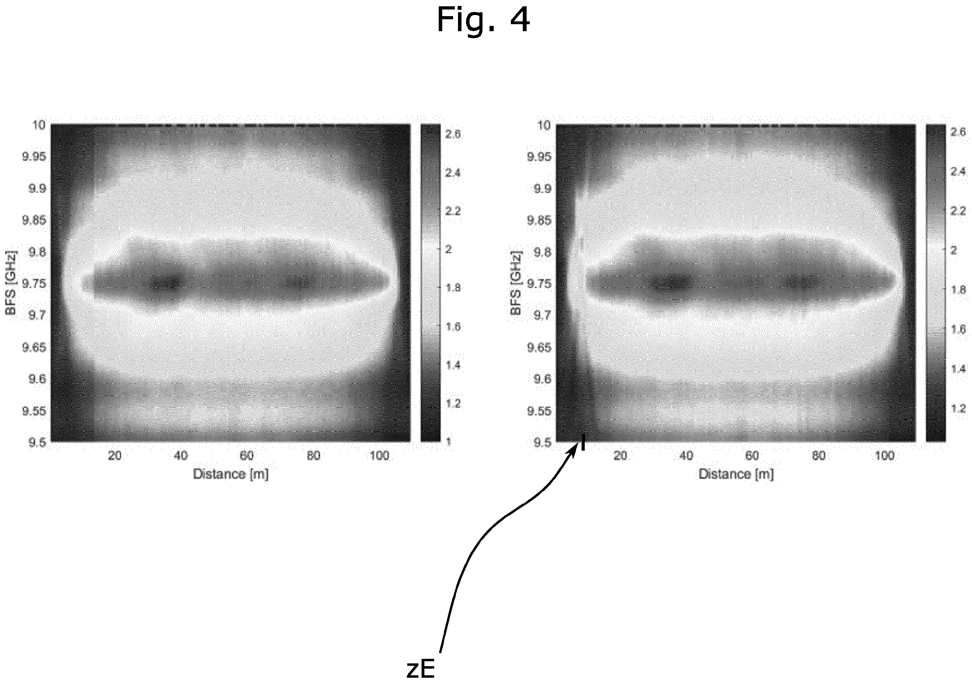

Figure 4 shows an intensity plot of a Brillouin gain spectrum (normalized Brillouin gain in arbitrary units) measured along a fiber with a length of approx.100 m in dependence on the difference frequency between the pump and the probe signal (Brillouin Frequency Shift, BFS), for the fiber without any attack (left image), and with a manipulation of the fiber at a longitudinal position zE of approx. 5m. As it can be seen from the comparison of the left and the right images, the both the manipulation and its location are clearly detectable from the Brillouin gain spectra shown in the two images.

Even though the invention has been illustrated and described in detail with help of a preferred embodiment example, the invention is not restricted by this example.

Other variations can be derived by a person skilled in the art without leaving the extent of protection of this invention.

### Reference numeral

- 1: optical communication fiber network
- 2: optical communication fiber
- 4: pump laser device
- 6: pump laser beam
- 7: pump signal
- 8: detection device
- 10: QKD network
- 12: control unit
- 14: probe laser device
- 16: probe laser beam
- 18: auxiliary optical communication fiber
- 20: master laser device
- 22: distributed fiber Bragg laser
- 24: optical isolator
- 26: polarization controller
- 28: first Mach-Zehnder modulator
- 30: (50/50) beam splitter
- 32: polarization controller
- 34: second Mach-Zehnder modulator
- 36: lock-in amplifier
- 38: optical amplifier
- 40: polarization controller
- 42: optical circulator
- 44: polarization controller
- 46: single-sideband-modulator
- 48: optical amplifier
- 50: (99/1) beam splitter
- 52: optical power meter
- 54: narrow-band bandpass filter
- 56: polarization randomizer
- 58: optical isolator
- 60: photodiode
- 62: oscilloscope
- 64: analyzing unit
- 66a/b: longitudinal position

- A: sender
- B: receiver
- E1: first ending
- E2: second ending
- L1: laser beam
- L2: laser beam
- L3: laser beam
- L4: laser beam
- zE: longitudinal position

## Claims

1. A method for localizing an eavesdropping attack on an optical communication fiber (2), in particular on an optical communication fiber (2) used for quantum key distribution and/or within a QKD network (10), wherein:
- a pump laser beam (6) is coupled into a first ending (E1) of the optical communication fiber (2) generating a pump signal propagating through the optical communication fiber (2),
- a measurement of a stimulated Brillouin scattering of the pump signal is performed at either said first ending (E1) or a second ending (E2) of the optical communication fiber (2), and
- a location of said eavesdropping attack is inferred from the result of said measurement of the stimulated Brillouin scattering in the optical communication fiber (2),
- a probe laser beam (16) is transmitted to a site of the second ending (E2) via an auxiliary optical communication fiber (18), or generated by a probe laser device (14) at the site of the second ending (E2) by means of synchronization information for synchronizing the probe laser device (14) with a pump laser device (6) that generates the pump laser beam (6), the synchronization information being transmitted by means of synchronization between a site of the first ending (E1) and the site of the second ending (E2),
- the probe laser beam (16) is coupled into the second ending (E2) of the optical communication fiber (2), generating a probe signal which is counterpropagating through the optical communication fiber (2) with respect to the pump signal for creating the stimulated Brillouin scattering, and
- a spatial resolution for the measurement of the stimulated Brillouin scattering is encoded in a correlation of the respective frequencies of the pump signal and the probe signal.

2. The method according to claim 1,
- wherein a frequency and/or a phase of the pump laser beam (6) is being modulated by means of a sweep frequency (fₘ),
- wherein the sweep frequency (fₘ) is scanned over a sweep frequency range, and
- wherein a frequency of the probe laser beam (16) is being modulated in dependence of said modulation of the frequency of the pump laser beam (6).

3. The method according to claim 2 or claim 1,
- wherein the pump laser beam (6) is generated by means of an arbitrary waveform generator and a single sideband modulator, and
- wherein a frequency of the probe laser beam (16) is being modulated in dependence of said modulation of the frequency of the pump laser beam (6).

4. The method according to claim 3 or claim 2,
wherein the frequency of the probe laser beam (16) is given by the frequency of the pump laser beam (6) shifted by an offset frequency, and wherein the offset frequency is scanned over a shifting frequency range.

5. The method according to one of the preceding claims,
- wherein a reference measurement of the stimulated Brillouin scattering is performed on the optical communication fiber (2) under preferential and/or standard conditions,
- wherein an operation measurement of the stimulated Brillouin scattering is performed on the optical communication fiber (2) during normal communication operation, and
- wherein the eavesdropping attack on the optical communication fiber (2) is inferred from a comparison of the respective results of said reference measurement with said operation measurement.

6. The method according to one of the preceding claims,
wherein for said measurement, a Brillouin gain is measured, preferably over a given frequency window in order to obtain a Brillouin gain spectrum.

7. The method according to claim 6 or claim 5,
wherein a technical nature of the eavesdropping attack on the optical communication fiber (2) is recognized from said comparison, preferably from the respective Brillouin gain spectra.

8. The method according to claim 7,
wherein said recognition is performed by a computational intelligence and/or a machine learning algorithm,
- wherein the reference measurement is performed during a training phase of the machine learning algorithm, and
- wherein at least one reference interference measurement of the stimulated Brillouin scattering is performed on the optical communication fiber (2) under an eavesdropping attack of a given nature during said training phase.

9. The method according to any of the preceding claims,
wherein a polarization averaging is performed on the probe signal for a given offset frequency and/or a given sweep frequency (fₘ) and/or a given frequency of the pump signal.

10. The method according to any of the preceding claims,
- wherein an optical communication fiber network (1) containing at least the auxiliary optical communication fiber (18) is used, said auxiliary optical communication fiber (18) having a first ending and a second ending, said second ending being located at the same site as the second ending (E2) of the optical communication fiber (2),
- wherein the probe laser beam (6) is transmitted through the auxiliary optical communication fiber (18) from its first ending to its second ending, and coupled into the second ending (E2) of the optical communication fiber (2) for the measurement of the stimulated Brillouin scattering.

11. The method according to any of the preceding claims,
- wherein the optical communication fiber network (1) containing at least the auxiliary optical communication fiber (18) is used, said auxiliary optical communication fiber (18) having the first ending and the second ending, said second ending being located at the same site as the second ending of the optical communication fiber (2) being defined as a receiver site (B) of said optical communication fiber (2),
- wherein a synchronization information is transmitted from a sender site (A) of the pump laser device (4) through the auxiliary optical communication fiber (18) to the probe laser device (14) located at the receiver site (B) of the auxiliary optical communication fiber (18), and
- wherein frequency and/or phase properties of the probe laser beam (16) coupled into the second ending (E2) of the optical communication fiber (2) are set according to said synchronization information.

12. The method according to any of the preceding claims,
wherein a pulses laser with a pulse length of at least 1 nanosecond is generated as the pump laser beam (6).

13. The method according to any of the preceding claims,
wherein the measurement of the stimulated Brillouin scattering of the pump signal is performed
- by means of a heterodyne detection using a local oscillator, preferably on the signal to be measured, and/or
- by means of a lock-in amplifier (36) and a modulation of the pump laser beam (6), and/or
- by means of a balanced heterodyne detection using a local oscillator, preferably on the signal to be measured, and a balanced detector.

14. A method for quantum key distribution,
- wherein a quantum correlation of a sender's portion and a receiver's portion of a physical state shared between said sender and said receiver via an optical communication fiber (2) is measured, and
- wherein, if said quantum correlation falls below a given threshold, an eavesdropping attack is localized by the method according to any of the preceding claims.

15. An optical communication fiber network (1), comprising:
- at least one optical communication fiber (2) configured for transmitting optical signals,
- a pump laser device (4) optically coupled to a first ending (E1) of said optical communication fiber (2) and configured to generate a pump laser beam (6) and to couple said pump laser beam (6) into said first ending (E1),
- a probe laser device (14) optically coupled to a second ending (E2) of said optical communication fiber (2) and configured to generate a probe laser beam (16) and to couple said probe laser beam (16) into said second ending (E2),
- a detection device (8) optically coupled to said first ending (e1) and configured to detect a Brillouin scattering in an optical signal leaving the optical communication fiber (2) at the first ending (E1), and
- a control unit (12) configured to perform control and analysis operations on the pump laser device (4) and the detection device (8), and to perform the method according one of claims 1 to 13 by suitable control and analysis operations on the pump laser device (4), the probe laser device (14) and the detection device (8).

## Patentansprüche

1. Verfahren zum Lokalisieren eines Abhörangriffs auf eine optische Kommunikationsfaser (2), insbesondere auf eine optische Kommunikationsfaser (2), die zur Quantenschlüsselverteilung und/oder innerhalb eines QKD-Netzwerks (10) verwendet wird, wobei:
- ein Pumplaserstrahl (6) in ein erstes Ende (E1) der optischen Kommunikationsfaser (2) eingekoppelt wird, wodurch ein Pumpsignal generiert wird, das sich durch die optische Kommunikationsfaser (2) ausbreitet,
- eine Messung einer stimulierten Brillouin-Streuung des Pumpsignals entweder an dem ersten Ende (E1) oder einem zweiten Ende (E2) der optischen Kommunikationsfaser (2) durchgeführt wird, und
- aus dem Ergebnis der Messung der stimulierten Brillouin-Streuung in der optischen Kommunikationsfaser (2) auf eine Stelle des Abhörangriffs geschlossen wird,
- ein Sondenlaserstrahl (16) über eine optische Hilfskommunikationsfaser (18) an einen Ort des zweiten Endes (E2) übertragen wird, oder durch eine Sondenlaservorrichtung (14) an dem Ort des zweiten Endes (E2) mittels Synchronisationsinformationen zum Synchronisieren der Sondenlaservorrichtung (14) mit einer Pumplaservorrichtung (6) generiert wird, die den Pumplaserstrahl (6) generiert, wobei die Synchronisationsinformationen mittels Synchronisation zwischen einem Ort des ersten Endes (E1) und dem Ort des zweiten Endes (E2) übertragen werden,
- der Sondenlaserstrahl (16) in das zweite Ende (E2) der optischen Kommunikationsfaser (2) eingekoppelt wird, wodurch ein Sondensignal generiert wird, das sich in Bezug auf das Pumpsignal zur Erzeugung der stimulierten Brillouin-Streuung gegenläufig durch die optische Kommunikationsfaser (2) ausbreitet, und
- eine räumliche Auflösung zur Messung der stimulierten Brillouin-Streuung in einer Korrelation der jeweiligen Frequenzen des Pumpsignals und des Sondensignals codiert wird.

2. Verfahren nach Anspruch 1,
- wobei eine Frequenz und/oder eine Phase des Pumplaserstrahls (6) mittels einer Sweep-Frequenz (fₘ) moduliert wird,
- wobei die Sweep-Frequenz (fₘ) über einen Sweep-Frequenzbereich gescannt wird, und
- wobei eine Frequenz des Sondenlaserstrahls (16) in Abhängigkeit von dieser Modulation der Frequenz des Pumplaserstrahls (6) moduliert wird.

3. Verfahren nach Anspruch 2 oder Anspruch 1,
- wobei der Pumplaserstrahl (6) mittels eines beliebigen Wellenformgenerators und eines Einseitenbandmodulators generiert wird, und
- wobei eine Frequenz des Sondenlaserstrahls (16) in Abhängigkeit von dieser Modulation der Frequenz des Pumplaserstrahls (6) moduliert wird.

4. Verfahren nach Anspruch 3 oder Anspruch 2,
wobei die Frequenz des Sondenlaserstrahls (16) durch die Frequenz des Pumplaserstrahls (6) gegeben ist, die um eine Versatzfrequenz verschoben ist, und wobei die Versatzfrequenz über einen Verschiebungsfrequenzbereich gescannt wird.

5. Verfahren nach einem der vorhergehenden Ansprüche,
- wobei eine Referenzmessung der stimulierten Brillouin-Streuung an der optischen Kommunikationsfaser (2) unter bevorzugten und/oder Standardbedingungen durchgeführt wird,
- wobei eine Betriebsmessung der stimulierten Brillouin-Streuung an der optischen Kommunikationsfaser (2) während des normalen Kommunikationsbetriebs durchgeführt wird, und
- wobei aus einem Vergleich der jeweiligen Ergebnisse der Referenzmessung mit der Betriebsmessung auf den Abhörangriff auf die optische Kommunikationsfaser (2) geschlossen wird.

6. Verfahren nach einem der vorhergehenden Ansprüche, wobei für die Messung eine Brillouin-Verstärkung gemessen wird, vorzugsweise über ein gegebenes Frequenzfenster, um ein Brillouin-Verstärkungsspektrum zu erhalten.

7. Verfahren nach Anspruch 6 oder Anspruch 5,
wobei aus diesem Vergleich, vorzugsweise aus den jeweiligen Brillouin-Verstärkungsspektren, eine technische Natur des Abhörangriffs auf die optische Kommunikationsfaser (2) erkannt wird.

8. Verfahren nach Anspruch 7,
wobei die Erkennung durch eine Rechenintelligenz und/oder einen Maschinenlernalgorithmus durchgeführt wird,
- wobei die Referenzmessung während einer Trainingsphase des Maschinenlernalgorithmus durchgeführt wird, und
- wobei mindestens eine Referenzinterferenzmessung der stimulierten Brillouin-Streuung an der optischen Kommunikationsfaser (2) unter einem Abhörangriff einer gegebenen Art während der Trainingsphase durchgeführt wird.

9. Verfahren nach einem der vorhergehenden Ansprüche, wobei eine Polarisationsmittelung an dem Sondensignal für eine gegebene Versatzfrequenz und/oder eine gegebene Sweep-Frequenz (fₘ) und/oder eine gegebene Frequenz des Pumpsignals durchgeführt wird.

10. Verfahren nach einem der vorhergehenden Ansprüche,
- wobei ein optisches Kommunikationsfasernetzwerk (1) verwendet wird, das mindestens die optische Hilfskommunikationsfaser (18) enthält, wobei die optische Hilfskommunikationsfaser (18) ein erstes Ende und ein zweites Ende aufweist, wobei sich das zweite Ende an dem gleichen Ort wie das zweite Ende (E2) der optischen Kommunikationsfaser (2) befindet,
- wobei der Sondenlaserstrahl (6) durch die optische Hilfskommunikationsfaser (18) von seinem ersten Ende zu seinem zweiten Ende übertragen und in das zweite Ende (E2) der optischen Kommunikationsfaser (2) zur Messung der stimulierten Brillouin-Streuung eingekoppelt wird.

11. Verfahren nach einem der vorhergehenden Ansprüche,
- wobei das optische Kommunikationsfasernetzwerk (1), das mindestens die optische Hilfskommunikationsfaser (18) enthält, verwendet wird, wobei die optische Hilfskommunikationsfaser (18) das erste Ende und das zweite Ende aufweist, wobei sich das zweite Ende an demselben Ort wie das zweite Ende der optischen Kommunikationsfaser (2) befindet, das als ein Empfängerort (B) der optischen Kommunikationsfaser (2) definiert ist,
- wobei eine Synchronisationsinformation von einem Senderort (A) der Pumplaservorrichtung (4) durch die optische Hilfskommunikationsfaser (18) zu der Sondenlaservorrichtung (14) übertragen wird, die sich an dem Empfängerort (B) der optischen Hilfskommunikationsfaser (18) befindet, und
- wobei Frequenz- und/oder Phaseneigenschaften des in das zweite Ende (E2) der optischen Kommunikationsfaser (2) eingekoppelten Sondenlaserstrahls (16) gemäß den Synchronisationsinformationen eingestellt werden.

12. Verfahren nach einem der vorhergehenden Ansprüche, wobei ein Pulslaser mit einer Pulslänge von mindestens 1 Nanosekunde als der Pumplaserstrahl (6) generiert wird.

13. Verfahren nach einem der vorhergehenden Ansprüche, wobei die Messung der stimulierten Brillouin-Streuung des Pumpsignals durchgeführt wird
- mittels einer Heterodyndetektion unter Verwendung eines lokalen Oszillators, vorzugsweise an dem zu messenden Signal, und/oder
- mittels eines Lock-in-Verstärkers (36) und einer Modulation des Pumplaserstrahls (6) und/oder
- mittels einer symmetrischen Heterodyndetektion unter Verwendung eines lokalen Oszillators, vorzugsweise an dem zu messenden Signal, und eines symmetrischen Detektors.

14. Verfahren zur Quantenschlüsselverteilung,
- wobei eine Quantenkorrelation des Anteils eines Senders und des Anteils eines Empfängers eines physikalischen Zustands, der zwischen dem Sender und dem Empfänger über eine optische Kommunikationsfaser (2) geteilt wird, gemessen wird, und
- wobei, falls die Quantenkorrelation unter einen gegebenen Schwellenwert fällt, ein Abhörangriff durch das Verfahren nach einem der vorhergehenden Ansprüche lokalisiert wird.

15. Optisches Kommunikationsfasernetzwerk (1), umfassend:
- mindestens eine optische Kommunikationsfaser (2), die zum Übertragen optischer Signale ausgelegt ist,
- eine Pumplaservorrichtung (4), die optisch mit einem ersten Ende (E1) der optischen Kommunikationsfaser (2) gekoppelt ist und dazu ausgelegt ist, einen Pumplaserstrahl (6) zu generieren und den Pumplaserstrahl (6) in das erste Ende (E1) zu koppeln,
- eine Sondenlaservorrichtung (14), die optisch mit einem zweiten Ende (E2) der optischen Kommunikationsfaser (2) gekoppelt ist und dazu ausgelegt ist, einen Sondenlaserstrahl (16) zu generieren und den Sondenlaserstrahl (16) in das zweite Ende (E2) zu koppeln,
- eine Detektionsvorrichtung (8), die optisch mit dem ersten Ende (e1) gekoppelt ist und dazu ausgelegt ist, eine Brillouin-Streuung in einem optischen Signal zu detektieren, das die optische Kommunikationsfaser (2) am ersten Ende (E1) verlässt, und
- eine Steuereinheit (12), die dazu ausgelegt ist, Steuer- und Analyseoperationen an der Pumplaservorrichtung (4) und der Detektionsvorrichtung (8) durchzuführen und das Verfahren nach einem der Ansprüche 1 bis 13 durch geeignete Steuer- und Analyseoperationen an der Pumplaservorrichtung (4), der Sondenlaservorrichtung (14) und der Detektionsvorrichtung (8) durchzuführen.

## Revendications

1. Procédé destiné à localiser une tentative d'écoute sur une fibre de communication optique (2), en particulier sur une fibre de communication optique (2) utilisée pour la distribution quantique de clés et/ou au sein d'un réseau QKD (10), dans lequel :
- un faisceau laser de pompage (6) est couplé à l'intérieur d'une première extrémité (E1) de la fibre de communication optique (2), ce qui génère un signal de pompage se propageant à travers la fibre de communication optique (2),
- une mesure d'une diffusion Brillouin stimulée du signal de pompage est effectuée, soit à ladite première extrémité (E1), soit à une deuxième extrémité (E2) de la fibre de communication optique (2), et
- un emplacement de ladite tentative d'écoute est déduit du résultat de ladite mesure de la diffusion Brillouin stimulée dans la fibre de communication optique (2),
- un faisceau laser sonde (16) est transmis à un site de la deuxième extrémité (E2) par le biais d'une fibre de communication optique auxiliaire (18), ou généré par un dispositif laser sonde (14) au niveau du site de la deuxième extrémité (E2) au moyen d'informations de synchronisation permettant de synchroniser le dispositif laser sonde (14) avec un dispositif laser de pompage (6) qui génère le faisceau laser de pompage (6), les informations de synchronisation étant transmises au moyen d'une synchronisation entre un site de la première extrémité (E1) et le site de la deuxième extrémité (E2),
- le faisceau laser sonde (16) est couplé à l'intérieur de la deuxième extrémité (E2) de la fibre de communication optique (2), ce qui génère un signal sonde qui se propage à travers la fibre de communication optique (2) en sens inverse par rapport au signal de pompage pour créer la diffusion Brillouin stimulée, et
- une résolution spatiale pour la mesure de la diffusion Brillouin stimulée est codée en une corrélation des fréquences respectives du signal de pompage et du signal sonde.

2. Procédé selon la revendication 1,
- dans lequel une fréquence et/ou une phase du faisceau laser de pompage (6) sont modulées au moyen d'une fréquence de balayage (fₘ),
- dans lequel on fait varier la fréquence de balayage (fₘ) sur une plage de fréquences de balayage, et
- dans lequel une fréquence du faisceau laser sonde (16) est modulée en fonction de ladite modulation de la fréquence du faisceau laser de pompage (6).

3. Procédé selon la revendication 2 ou la revendication 1,
- dans lequel le faisceau laser de pompage (6) est généré au moyen d'un générateur de formes d'onde arbitraires et d'un modulateur à bande latérale unique, et
- dans lequel une fréquence du faisceau laser sonde (16) est modulée en fonction de ladite modulation de la fréquence du faisceau laser de pompage (6).

4. Procédé selon la revendication 3 ou la revendication 2,
dans lequel la fréquence du faisceau laser sonde (16) est donnée par la fréquence du faisceau laser de pompage (6) décalée par une fréquence de décalage, et dans lequel on fait varier la fréquence de décalage sur une plage de fréquences de décalage.

5. Procédé selon une des revendications précédentes,
- dans lequel une mesure de référence de la diffusion Brillouin stimulée est effectuée sur la fibre de communication optique (2) dans des conditions privilégiées et/ou normalisées,
- dans lequel une mesure en fonctionnement de la diffusion Brillouin stimulée est effectuée sur la fibre de communication optique (2) lors du fonctionnement normal de la communication, et
- dans lequel la tentative d'écoute sur la fibre de communication optique (2) est déduite d'une comparaison entre les résultats respectifs de ladite mesure de référence et de ladite mesure en fonctionnement.

6. Procédé selon une des revendications précédentes, dans lequel, pour ladite mesure, un gain Brillouin est mesuré, de préférence sur une fenêtre de fréquence donnée afin d'obtenir un spectre de gain Brillouin.

7. Procédé selon la revendication 6 ou la revendication 5,
dans lequel une nature technique de la tentative d'écoute sur la fibre de communication optique (2) est reconnue à partir de ladite comparaison, de préférence à partir des spectres de gain Brillouin respectifs.

8. Procédé selon la revendication 7,
dans lequel ladite reconnaissance est effectuée par une intelligence computationnelle et/ou un algorithme d'apprentissage automatique,
- dans lequel la mesure de référence est effectuée au cours d'une phase d'entraînement de l'algorithme d'apprentissage automatique, et
- dans lequel au moins une mesure d'interférence de référence de la diffusion Brillouin stimulée est effectuée sur la fibre de communication optique (2) lors d'une tentative d'écoute d'une nature donnée au cours de ladite phase d'entraînement.

9. Procédé selon l'une quelconque des revendications précédentes,
dans lequel la polarisation moyenne est calculée sur le signal sonde pour une fréquence de décalage donnée et/ou une fréquence de balayage donnée (fₘ) et/ou une fréquence donnée du signal de pompage.

10. Procédé selon l'une quelconque des revendications précédentes,
- dans lequel un réseau de fibres de communication optique (1) contenant au moins la fibre de communication optique auxiliaire (18) est utilisé, ladite fibre de communication optique auxiliaire (18) ayant une première extrémité et une deuxième extrémité, ladite deuxième extrémité se situant au niveau du même site que la deuxième extrémité (E2) de la fibre de communication optique (2),
- dans lequel le faisceau laser sonde (6) est transmis à travers la fibre de communication optique auxiliaire (18) de sa première extrémité à sa deuxième extrémité, et couplé à l'intérieur de la deuxième extrémité (E2) de la fibre de communication optique (2) pour la mesure de la diffusion Brillouin stimulée.

11. Procédé selon l'une quelconque des revendications précédentes,
- dans lequel le réseau de fibres de communication optique (1) contenant au moins la fibre de communication optique auxiliaire (18) est utilisé, ladite fibre de communication optique auxiliaire (18) ayant la première extrémité et la deuxième extrémité, ladite deuxième extrémité se situant au niveau du même site que la deuxième extrémité de la fibre de communication optique (2) étant définie comme un site récepteur (B) de ladite fibre de communication optique (2),
- dans lequel des informations de synchronisation sont transmises depuis un site émetteur (A) du dispositif laser de pompage (4) à travers la fibre de communication optique auxiliaire (18) au dispositif laser sonde (14) situé au niveau du site récepteur (B) de la fibre de communication optique auxiliaire (18) et
- dans lequel des propriétés de fréquence et/ou de phase du faisceau laser sonde (16) couplé à l'intérieur de la deuxième extrémité (E2) de la fibre de communication optique (2) sont établies en fonction desdites informations de synchronisation.

12. Procédé selon l'une quelconque des revendications précédentes,
dans lequel un laser à impulsions avec une longueur d'impulsion d'au moins 1 nanoseconde est généré en tant que faisceau laser de pompage (6).

13. Procédé selon l'une quelconque des revendications précédentes,
dans lequel la mesure de la diffusion Brillouin stimulée du signal de pompage est effectuée
- au moyen d'une détection hétérodyne utilisant un oscillateur local, de préférence sur le signal à mesurer, et/ou
- au moyen d'un amplificateur à détection synchrone (36) et d'une modulation du faisceau laser de pompage (6), et/ou
- au moyen d'une détection hétérodyne équilibrée utilisant un oscillateur local, de préférence sur le signal à mesurer, et un détecteur équilibré.

14. Procédé de distribution quantique de clés,
- dans lequel une corrélation quantique entre une partie émetteur et une partie récepteur d'un état physique partagé entre ledit émetteur et ledit récepteur par le biais d'une fibre de communication optique (2) est mesurée, et
- dans lequel, si ladite corrélation quantique devient inférieure à un seuil donné, une tentative d'écoute est localisée par le procédé selon l'une quelconque des revendications précédentes.

15. Réseau de fibres de communication optique (1), comprenant :
- au moins une fibre de communication optique (2) conçue pour transmettre des signaux optiques,
- un dispositif laser de pompage (4) couplé optiquement à une première extrémité (E1) de ladite fibre de communication optique (2) et conçu pour générer un faisceau laser de pompage (6) et pour coupler ledit faisceau laser de pompage (6) à l'intérieur de ladite première extrémité (E1),
- un dispositif laser sonde (14) couplé optiquement à une deuxième extrémité (E2) de ladite fibre de communication optique (2) et conçu pour générer un faisceau laser sonde (16) et pour coupler ledit faisceau laser sonde (16) à l'intérieur de ladite deuxième extrémité (E2),
- un dispositif de détection (8) couplé optiquement à ladite première extrémité (e1) et conçu pour détecter une diffusion Brillouin dans un signal optique sortant de la fibre de communication optique (2) à la première extrémité (E1), et
- une unité de commande (12) conçue pour effectuer des opérations de commande et d'analyse sur le dispositif laser de pompage (4) et le dispositif de détection (8), et pour mettre en œuvre le procédé selon une des revendications 1 à 13 par des opérations de commande et d'analyse appropriées sur le dispositif laser de pompage (4), le dispositif laser sonde (14) et le dispositif de détection (8).
